# EUROPEAN PATENT APPLICATION

(11) **EP 3 587 006 A1**
(43) Date of publication of application: **01.01.2020**
(21) Application number: 18180012.9
(22) Date of filing: 27.06.2018
(51) Int. Cl.: B22F 3/105, B33Y 10/00, B33Y 30/00, B33Y 50/02, B29C 64/393

(54) **3D-PRINTING METHOD AND MANUFACTURING DEVICE**

(71) Applicant: Siemens Aktiengesellschaft, 80333 München (DE)
(72) Inventor: Fergani, Omar, 52080 Aachen (DE); Geisen, Ole, 10781 Berlin (DE)

(57) **Abstract**

The present invention pertains to a 3D-printing method and a manufacturing device configured to execute such a method. According to the invention, each material layer is probed with a defect sensor for defects. If a defect is found, it is analyzed and categorized in order to define an ablation area around the detected defect and a re-melting area around the ablation area. The material is subsequently ablated within the ablation area, new material is recoated and the material is re-melted and solidified within the re-melting area to repair the material layer having the detected defect.

The present invention relates particularly to Selective Laser Melting (SLM) processes. However, the present concepts are not limited to SLM and may be applied to various other additive manufacturing methods. The solution of the present invention advantageously provides a simple yet effective automatized in-situ solution for repairing additively formed components during manufacture.

## Description

The present invention pertains to a 3D-printing method and a manufacturing device for executing such a 3D-printing method.

In generative or additive manufacturing processes, also commonly referred to as "3D-printing processes", one or several materials are sequentially deposited and cured or fused in layers based on a digitized geometric model of an object. Amongst various advantages, 3D printing offers the possibility to integrally form complex components in one continuous process, which otherwise - within conventional manufacturing - would necessarily require elaborate installation and/or manufacturing efforts. 3D printing provides extraordinary design freedom and hence it is widely used for manufacturing with multiple applications in engineering, construction, industrial design, the transport industry, and generally everywhere where a resource-efficient process chain is used to produce individualized components in small and large series.

In selective laser melting (SLM), for example, a component is built up layer by layer from a modelling material, in particular a metal, by depositing the modelling material in powder form on a platform and melting it locally using a focused high power-density laser, resulting in a solid, integral component after cooling. The remaining and/or surrounding powder can generally serve as a static support for the part of the component built up to a specific point. In addition to laser beams, however, electron beams or other particle beams as well as focused radiation of various sorts, e.g. microwave radiation, are sometimes used for local energy input in 3D-printing processes.

Recently, monitoring techniques have been increasingly suggested in order to obtain information about potential anomalies or printing defects. However, often the detection methods are only applied after the component is finished in order to scrap defective components that do not comply with given requirements or specifications. However, sometimes real-time and/or online monitoring methods are suggested to obtain a detailed evaluation of the component already during the manufacturing process.

For example, prior art document Song et al., "Real Time Cr Measurement Using Optical Emission Spectroscopy during Direct Metal Deposition Process," IEEE Sensors Journal, vol. 12, no. 5, pp. 958-964, May 2012, discloses a real-time composition analysis for material characterization, defect detection, process optimization and process control of a direct metal deposition process (also known as Laser Metal Deposition). The method uses optical emission spectroscopy of plasma, which is induced by a process laser beam focused onto a metal powder. However, none of these methods provide a consistent strategy to repair affected areas.

Against this background, it is an object of the present invention to find solutions for automatized healing of defective areas during additive manufacturing.

This object is achieved by a 3D-printing method having the features of claim 1 and a manufacturing device having the features of claim 15.

According to an aspect of the invention a 3D-printing method is provided. The method comprises additively manufacturing a component by depositing and solidifying a modelling material in material layers; probing, during additive manufacturing, each respective last material layer with a defect sensor for defects, wherein the defect sensor acquires defect data on any detected defect; determining a defect category of the detected defect on basis of the acquired defect data; defining an ablation area around the detected defect and an ablation depth beneath the detected defect based on the defect category; defining a re-melting area around the ablation area based on the defect category; ablating the modelling material within the ablation area down to the ablation depth; recoating the ablation area with the modelling material; and re-melting and solidifying the modelling material within the re-melting area to repair the material layer having the detected defect.

According to another aspect of the invention, a manufacturing device is provided. The manufacturing device is configured to execute the method according to the invention.

One idea of the present invention is to use sensing technologies to detect potential defects directly at each deposited layer during the generative manufacturing process. Each potential defect is identified, measured and analyzed and based on this assessment a repair strategy is conceived. To this end, several process variables are defined. First, an ablation area and an ablation depth are specified, which characterize a volume around the corrupted material that is to be removed subsequently. For example, an ultrashort pulse laser, which may or may not be the same laser that is used for the additive manufacturing process, e.g. of a SLM process, may be used to ablate the ablation area and thus create a homogenous ablated shape safely around the original defective area so that the ablated region can be reworked without risk of inducing other defects. Second, a re-melting area is set around the ablation area, in which newly deposited modelling material as well as the previously deposited (and solidified) material are re-melted together and subsequently solidified to repair the defective material layer. Hence, the re-melting area is generally larger than the ablation area and serves as a transition region between the defective section and the rest of the component deposited at this point of the process. In order to define the ablation area and the re-melting area, geometrical limitations and boundary conditions may be taken into account, e.g. component edges, thins walls, upskin or downskin areas etc. The repair strategy and the defect assessment may be based on established rules and/or libraries, wherein the ablation parameters, e.g. of an ablation laser, may be based on simulations or the like, e.g. material and/or component based. The affected area may then be re-melted using a predefined scan strategy, e.g. using a laser in continuous and/or pulsed mode, which may be based, for example, on simulation tools predicting for instance melt bath/pool geometries of melted modelling material.

The present invention provides a simple yet effective in-situ repair function for additively manufactured components. Defective areas may be repaired during a continuous manufacturing process, i.e. each deposited (and, as the case may be, solidified) layer may be probed, discovered defects may be repaired and the next layer may be deposited immediately after, these steps being iterated until the component is finished. Alternatively, it is also possible to manufacture a component gradually based on these basic steps with longer breaks in between the individual steps.

In general, aspects of the invention offer great advantages for 3D printing or AM technology since 3D components may be printed with minimal reject/scrap rate. This allows for a more efficient, material saving and time saving manufacturing process. Particularly advantageous in general is the reduction of costs, weight, lead time, part count and manufacturing complexity coming along with employing AM technology for printing various components. Moreover, the geometric and functional shape of the printed components or objects may be flexibly designed with regard to the intended technical purpose of parts or regions of the component/object.

Free form fabrication (FFF), direct manufacturing (DM), fused deposition modelling (FDM), powder bed printing (PBP), laminated object manufacturing (LOM), laser metal deposition (LMD), stereo-lithography (SL), selective laser sintering (SLS), selective laser melting (SLM), selective heat sintering (SHS), electron beam melting (EBM), direct ink writing (DIW), digital light processing (DLP) and additive layer manufacturing (ALM) belong to a general hierarchy of additive manufacturing (AM) methods, generally termed as 3D printing techniques. Those systems are used for generating three-dimensional objects based on digital model data by creating a cross-sectional pattern of the object to be formed and forming the three-dimensional solid object by sequentially building up layers of material. Any of such procedures will be referred to in the following description as AM or 3D-printing without loss of generality. AM or 3D-printing techniques usually include selectively depositing material layer by layer, selectively fusing or solidifying the material and removing excess material, if needed. 3D printing is currently used for prototyping and distributed manufacturing with multiple applications in engineering, construction, industrial design, automotive industries, aerospace industries, etc.

Advantageous embodiments and improvements of the present invention are found in the subordinate claims.

According to an embodiment, the defect sensor may detect electromagnetic radiation emitted and/or reflected from the probed material layer. Radiation is produced during typical AM processes, e.g. during SLM, and can be used for assessing the quality of a deposited material layer. Suitable sensors may be utilized that allow conclusions to be drawn from the radiation intensity on aspects like heat dissipation, a size of a liquefied mass and/or a molten bath etc. In one particular example, the light output of a plasma may be analyzed, which is generated at the melting point where a laser or other energy beam hits the modelling material. However, in other embodiments of the invention, other technologies for sensing defects may be employed as well, e.g. three-dimensional ultrasound probing of the material layers.

According to an embodiment, the electromagnetic radiation may comprise thermal radiation, IR radiation and/or visible light. Common systems, e.g. cameras, operate, for example, in the infrared or near-infrared range, and/or in the visual regime, e.g. optical 2D- or 3D-scanners.

According to an embodiment, the defect sensor may comprise a pyrometer, a photodetector and/or an optical 3D-scanner. Photodetectors comprise, for example, semiconductor-based detectors like active-pixel sensors (e.g. CMOS technology), LEDs, photodiodes and so on. The employed systems may be calibrated for specific materials and/or process parameters (laser power, scan speed, etc.) and process windows may be defined for measured parameters that are acceptable. Measured values outside these windows then may indicate an increased probability for a defect.

According to an embodiment, the defect data may comprise a defect area, a defect depth, a defect shape and/or material properties of the defect. Material properties comprise, for example, a degree of hardening of the modelling material.

According to an embodiment, the defect category may assess a type of the defect and/or a criticality of the defect. For example, it may be assessed if the defect is repairable at all or if it is considered terminal so that the semi-finished component has to be scrapped. In another example, it may be assessed if the defect is considered minor so that mending may not be necessary. The criticality of the defect may depend on the specific use case at hand. For some components stricter quality requirements may apply than for others.

According to an embodiment, the type of the defect may comprise thermal cracks, gas inclusions and/or fusion deficiencies of the modelling material.

According to an embodiment, the ablation depth may be n times a layer height of the probed material layer.

According to an embodiment, n may be in the range of 0.1 to 3.0. For example, n may be in the range of 0.5 to 1.5. In one particular example, n may be equal to 1 and hence material is removed down to a depth of the probed material layer, that is the layer deposited last. However, in other examples, n may be larger than 1, e.g. the probed material layer may have a layer thickness of 40 µm while the material is removed down to an ablation depth of 50 µm, in which case n = 1.25.

According to an embodiment, ablating the modelling material may comprise smoothing a defect contour of the detected defect. Smoothing the defect contour may include simplifying the defect contour and/or scaling the defect shape to remove more than the affected area, hence reduce the risk of inducing further defects.

According to an embodiment, the method may be iterated on the repaired material layer. Hence, the defect sensor may be used to monitor if a repair attempt was successful or not. In case the outcome does not fulfill certain requirements the repair process may be repeated, because the repaired defect is still considered to be defective.

According to an embodiment, the method may be stopped after a number of unsuccessful repair attempts. Thus, a maximum number of repair attempts may be defined. If the maximum is reached, the manufacturing process may be interrupted or terminated. Additionally or alternatively, an alarm may be set off.

According to an embodiment, the modelling material may be ablated with a laser. In one particular embodiment, the laser used for the ablation may be the same as the laser used for the actual AM process, e.g. a laser of a SLM method. However, in other embodiments, there a dedicated laser may be provided for the repair process, e.g. a pulsed laser, whereas the AM laser may be running in a continuous mode.

According to an embodiment, the laser may be configured as an ultrashort pulse laser. The laser may emit pulses of light of the order of femtoseconds to picoseconds. Common current ultrashort pulse laser technologies include, for example, Ti-sapphire lasers.

The invention will be explained in greater detail with reference to exemplary embodiments depicted in the drawings as appended.

The accompanying drawings are included to provide a further understanding of the present invention and are incorporated in and constitute a part of this specification. The drawings illustrate the embodiments of the present invention and together with the description serve to explain the principles of the invention. Other embodiments of the present invention and many of the intended advantages of the present invention will be readily appreciated as they become better understood by reference to the following detailed description. The elements of the drawings are not necessarily to scale relative to each other. In the figures, like reference numerals denote like or functionally like components, unless indicated otherwise.
Fig. 1 shows a schematic flow diagram of a 3D-printing method according to an embodiment of the invention.
Fig. 2 shows a manufacturing device for executing the 3D-printing method of Fig. 1.
Fig. 3 shows a material layer manufactured with the device of Fig. 2 having several defects.
Fig. 4 shows the material layer of Fig. 3 after repairing the defects with the method of Fig. 1.
Fig. 5 shows several steps of the repair process used in Fig. 4.

Although specific embodiments are illustrated and described herein, it will be appreciated by those of ordinary skill in the art that a variety of alternate and/or equivalent implementations may be substituted for the specific embodiments shown and described without departing from the scope of the present invention. Generally, this application is intended to cover any adaptations or variations of the specific embodiments discussed herein.

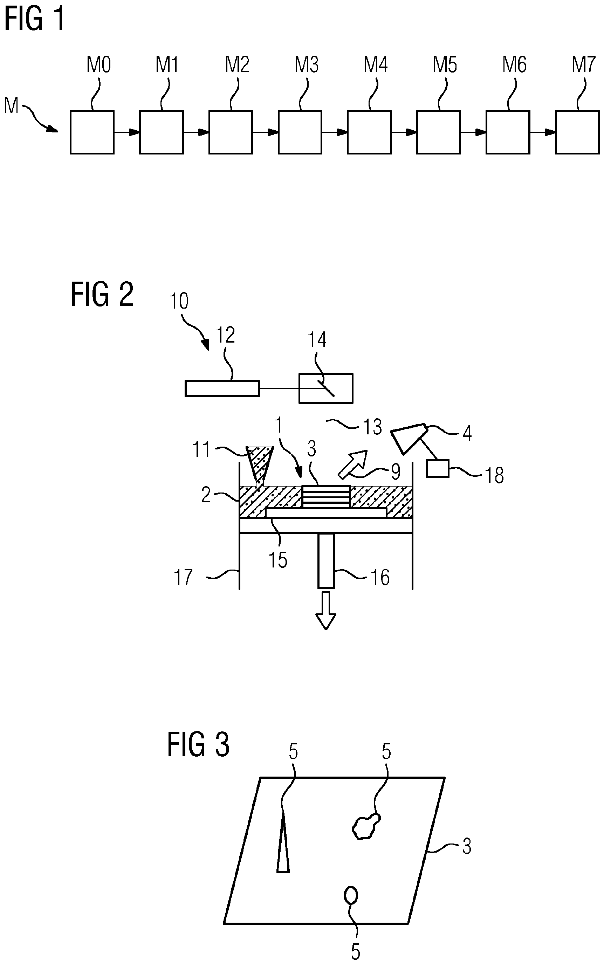

Figure 1 schematically shows a schematic flow diagram of a 3D-printing method M according to an embodiment of the invention. Fig. 2 shows a manufacturing device 10 for executing the 3D-printing method M of Fig. 1.

The 3D-printing method M may be used for the additive production of a component 1 from a modelling material 2. To this end, the method M comprises under M0 additively manufacturing the component 1 by depositing and solidifying a modelling material 2 in material layers 3. This step may particularly comprise liquefying or melting the deposited modelling material 2. However, in other embodiments the modelling material 2 may already be deposited in a fluid or flowable condition. The basic AM process may be, for example, a selective laser melting (SLM) process, in which the deposited modelling material 2 is melted by a continuous or pulsed laser beam 13 being focused on a localized spot on the material layer 3. This results in a molten pool or bath at the irradiated spot, which may be several material layers 3 deep and which may also melt some of the surrounding and already solidified modelling material 2. Next the laser beam 13 is moved further and the melt solidifies through cooling, whereby the last material layer 3 is fused with the material layer(s) 3 beneath.

The modelling material 2 may be selected from the group of metallic materials, metallic material combinations and metallic alloys. In one particular example, the modelling material 2 may be titanium, aluminum and/or other metal and/or an alloy or combination of these. In principle, the manufacturing device 10 may be configured for multi-component printing so that combinations of different materials may be printed at the same time. The person of skill will be readily aware that the term modelling material 2 includes such combinations of materials. The modelling material 2 may particularly be provided in powder form.

Generally, the present invention provides many possibilities to liquefy the modelling material 2 by introducing heat locally into the deposited modelling material 2. The particular embodiment of the manufacturing device 10 in Fig. 2 and the associated 3D-printing method M is based on the use of a laser beam 13 within a SLM process. Such a laser beam 13 can generate heat very precisely and in a controlled manner. In SLM, the modelling material 2 is applied in powder form from a material supply 11 to a fabrication table 15 or platform within a fabrication chamber 17. The material supply 11 is shown in Fig. 2 merely schematically. The person of skill will understand that the material supply 11 may comprise, for example, a powder delivery system of the known variety usually employed in SLM, wherein powder is delivered stepwise (for each deposited layer of modelling material 2) via a roller from a powder supply chamber into the fabrication 17 chamber. The modelling material 2 forms a so-called powder bed on the fabrication table 15 within the fabrication chamber 17. The modelling material 2 laying on top of the powder bed is liquefied by local laser irradiation with the laser beam 13, resulting in a solid, continuous metal component 1 after cooling. However, it is understood that alternatively or in addition to a laser beam 13, the 3D-printing method M may also use particle beams, e.g. an electron beam, and/or microwave radiation or other energy beams for liquefying the modelling material 2.

The manufacturing device 10 in Fig. 2 provides an energy source in the form of a laser 12, for example a Nd:YAG laser, a CO2 laser or the like. In Fig. 2, the laser 12 transmits the laser beam 13 selectively (i.e. locally) onto a certain part of the powder surface of the powdery modelling material 2. For this purpose, an optical deflection device or a scanner module such as a movable or tiltable mirror 14 can be provided, which deflects the laser beam 13 depending on its tilt position onto a certain part of the powder surface of the modelling material 2. At the point of impact of the laser beam 13, the modelling material 2 is heated so that the powder particles are locally melted and form an agglomerate during cooling. Depending on a digital production model provided by a CAD system ("computer-aided design"), the laser beam 13 scans the powder surface. After selective melting and local agglomeration of the powder particles in the surface material layer 3 of the modelling material 2, excess and non-agglomerated metal modelling material 2 may be removed. Then the fabrication table 15 is lowered by means of a fabrication piston 16 (see arrow in Fig. 2) and new modelling material 2 is transferred from the material supply 11 into the fabrication chamber 17 with the aid of a powder feed or another suitable device. The modelling material 2 may be preheated by infrared light or similar means to a working temperature just below the melting temperature of the modelling material 2 to accelerate the melting process. In this way, a three-dimensional sintered or "printed" metal component 1 is created from agglomerated modelling material 2 in an iterative generative build-up process, in which the surrounding powdery metal modelling material 2 can serve to support the part of metal component 1 that has been built up to then. Due to the continuous downward movement of the fabrication table 15 the metal component 1 is manufactured in layered model generation.

Still referring to Figs. 1 and 2, the method M further comprises under M1 probing each respective last material layer 3 with a defect sensor 4 for defects 5, wherein the defect sensor 4 acquires defect data on any detected defect 5. The defect sensor 4 may comprise a pyrometer, a photodetector and/or an optical 3D-scanner or similar and hence may detect electromagnetic radiation 9 emitted and/or reflected from the probed material layer 3. Such electromagnetic radiation 9, e.g. thermal radiation, IR radiation and/or visible light, may stem from plasma, which is generated above the molten bath at the impact point of the laser beam 13. The acquired defect data, which may comprise information about a defect area, a defect depth, a defect shape, material properties of the defect 5 and so on, are transferred from the defect sensor 4 to a control device 18 of the manufacturing device 10. The control device 18 is communicatively coupled to the defect sensor 4 and configured to control the manufacturing device 10.

The method M further comprises under M2 determining, by the control device, a defect category of the detected defect 5 on basis of the acquired defect data. The defect category may assess, for example, a type of the defect 5 and/or a criticality of the defect 5 or similar. For example, the criticality of the defect 5 may be minor so that no further repair process is needed for the defect 5. In another example, the criticality of the defect 5 may be terminal and non-repairable so that the AM process is immediately stopped. In another example, the criticality of the defect 5 may require a repair process as it will be explained in the following.

Fig. 3 exemplary shows three different defects 5 on or in a material layer 3. The left defect 5 may be, for example, a thermal crack of the solidified modelling material 2. The upper defect 5 may represent, for example, a fusion deficiency of the modelling material 2, i.e. a region of the material layer 3 where the modelling material 2 did not fuse properly, which can compromise the integrity of the final component 1. The lower defect 5 may represent, for example, a gas inclusion or similar, i.e. a cavity filled with unwanted material.

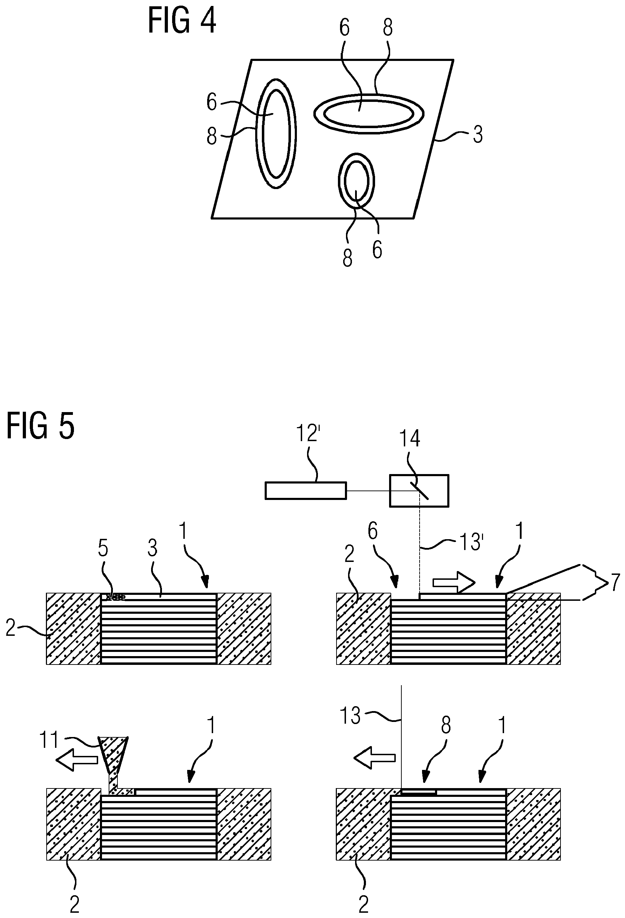

The method M further comprises under M3 defining, by the control device, an ablation area 6 around the detected defect 5 and an ablation depth 7 beneath the detected defect 5 based on the defect category (cf. Figs. 4 and 5). The method M further comprises under M4 defining, by the control device, a re-melting area 8 around the ablation area 6 based on the defect category. The ablation area 6 and the re-melting area 8 are shown in Figs. 4 and 5, while the ablation depth 7 is illustrated in Fig. 5 (upper right). The ablation area 6 and the ablation depth 7 define a volume around the defect 5, wherein the modelling material 2 is to be removed in order to repair the defect 5. Consequently, the method M further comprises under M5 ablating the modelling material 2 within the ablation area 6 down to the ablation depth 7. Next, the method M comprises under M6 recoating the ablation area 6 with the modelling material 3. The re-melting area 8 on the other hand defines a larger volume around the ablating area 6 for remerging the recoated modelling material 2 with the modelling material 2 already deposited (and potentially solidified) around the ablating area 6 (cf. Fig. 4). Finally, the method M thus comprises under M7 re-melting and solidifying the modelling material 2 within the re-melting area 8 to repair the material layer 3 having the detected defect 5.

Fig. 4 schematically shows the material layer 3 of Fig. 3 after the repair process. As can be seen in Fig. 4, contours of the detected defect 5 are smoothed by providing an adequately shaped ablating area 6 and re-melting area 8. After the repair of one or several defects 5 in the last material layer 3, the method M may either continue with depositing and solidifying the next material layer 3 on top the repaired material layer 3. Or, alternatively, the method M may be iterated on the repaired material layer 3, i.e. the repaired material layer 3 may be probed again for defects 5. Thus, another repair run can be performed in case the preceding reworking process could not properly repair one or several of the defects 5. In principle, the method M may be iterated several times, e.g. until a maximal number of repair attempts is reached and the method M is terminated.

Fig. 5 shows several steps of the repair process used in Fig. 4. On the upper left of Fig. 5, the component 1 can be seen within the powder bed of modelling material 2. The uppermost material layer 3 features a defect 5 on the left, e.g. a region where the modelling material 2 is not properly fused with the surrounding modelling material 2. Based on properties of the defect 5, an ablation area 6 with ablation depth 7 is defined and then ablated with a laser beam 13' of a laser 12' (see upper right of Fig. 5). The ablation depth 7 may generally be n times a layer height of the probed material layer 3. However in the specific example of Fig. 5, the ablation depth 7 is substantially equal to the layer height, i.e. n = 1. The laser 12' is configured in this particular example as an ultrashort pulse laser. The laser 12' may be provided in the manufacturing device 10 for repair works only, that is the laser 12 for the basic AM process and the laser 12' for the ablation are different entities in the depicted embodiment. However, in other embodiments the laser 12 for the basic AM process may equally well be used as well for repair processes. In that case however, the laser 12 may be operated under different parameters and/or a different setup. After the modelling material 2 has been ablated, the ablation area 6 is recoated with modelling material 2 (cf. lower left in Fig. 5). Then, the modelling material 2 is re-melted and subsequently solidified within the re-melting area 8 around the ablation area 6. The re-melting of the modelling material 2 may be performed by the laser 12 of the basic AM process. However, in typical use cases, the laser 12 will be operated under different working conditions than in case of the normal AM process. This is due to the fact that a typical re-melting process features different prerequisites, as in this case part of the modelling material 2 is usually already solidified (the material surrounding the ablation area 6 within the re-melting area 8). For example, the degree of reflection of solid material is higher than that of powder. Further, the heat balance during re-melting of the solid material is different than in case of powder. Moreover, the process takes place in an isolated region of the component 1 so that adapted exposure strategies of the laser beam 13 may be required.

The method M may then be iterated with additional material layers 3 until the component 1 if finished. Defects 5 are thus removed in-situ in an automatized way during the manufacture of the component 1. Consequently, the scrap rate of defective components 1 may be significantly reduced.

In the foregoing detailed description, various features are grouped together in one or more examples or examples with the purpose of streamlining the disclosure. It is to be understood that the above description is intended to be illustrative, and not restrictive. It is intended to cover all alternatives, modifications and equivalents. Many other examples will be apparent to one skilled in the art upon reviewing the above specification.

The embodiments were chosen and described in order to best explain the principles of the invention and its practical applications, to thereby enable others skilled in the art to best utilize the invention and various embodiments with various modifications as are suited to the particular use contemplated. Many other examples will be apparent to one skilled in the art upon reviewing the above specification.

## Claims

1. A 3D-printing method (M), comprising:
additively manufacturing (M0) a component (1) by depositing and solidifying a modelling material (2) in material layers (3);
probing (M1), during additive manufacturing, each respective last material layer (3) with a defect sensor (4) for defects (5), wherein the defect sensor (4) acquires defect data on any detected defect (5);
determining (M2) a defect category of the detected defect (5) on basis of the acquired defect data;
defining (M3) an ablation area (6) around the detected defect (5) and an ablation depth (7) beneath the detected defect (5) based on the defect category;
defining (M4) a re-melting area (8) around the ablation area (6) based on the defect category;
ablating (M5) the modelling material (2) within the ablation area (6) down to the ablation depth (7);
recoating (M6) the ablation area (6) with the modelling material (3); and
re-melting (M7) and solidifying the modelling material (2) within the re-melting area (8) to repair the material layer (3) having the detected defect (5).

2. The method (M) according to claim 1, wherein the defect sensor (4) detects electromagnetic radiation (9) emitted and/or reflected from the probed material layer (3).

3. The method (M) according to claim 2, wherein the electromagnetic (9) radiation comprises at least one of thermal radiation, IR radiation and visible light.

4. The method (M) according to one of the claims 1 to 3, wherein the defect sensor (4) comprises at least one of a pyrometer, a photodetector and an optical 3D-scanner.

5. The method (M) according to one of the claims 1 to 4, wherein the defect data comprise at least one of a defect area, a defect depth, a defect shape and material properties of the defect (5).

6. The method (M) according to one of the claims 1 to 5, wherein the defect category assesses at least one of a type of the defect (5) and a criticality of the defect (5) .

7. The method (M) according to claim 6, wherein the type of the defect (5) comprises at least one of thermal cracks, gas inclusions and fusion deficiencies of the modelling material (2).

8. The method (M) according to one of the claims 1 to 7, wherein the ablation depth (7) is n times a layer height of the probed material layer (3).

9. The method (M) according to claim 8, wherein n is in the range of 0.1 to 3.0.

10. The method (M) according to one of the claims 1 to 9, wherein ablating (M5) the modelling material (2) comprises smoothing a defect contour of the detected defect (5) .

11. The method (M) according to one of the claims 1 to 10, wherein the method (M) is iterated on the repaired material layer (3).

12. The method (M) according to claim 11, wherein the method (M) is stopped after a number of unsuccessful repair attempts.

13. The method (M) according to one of the claims 1 to 12, wherein the modelling material (2) is ablated with a laser (12, 12').

14. The method (M) according to claim 13, wherein the laser (12') is configured as an ultrashort pulse laser.

15. A manufacturing device (10) configured to execute a 3D-printing method (M) according to one of the claims 1 to 14.
